# EUROPÄISCHE PATENTANMELDUNG

(11) **EP 4 826 225 A1**
(43) Veröffentlichungstag der Anmeldung: **21.10.2026**
(21) Anmeldenummer: 25465523.6
(22) Anmeldetag: 16.04.2025
(51) Int. Cl.: F01N 1/08, F01N 3/00, H01M 8/04119, H01M 8/0662, F01N 1/10, F01N 13/02

(54) **SCHALLDÄMPFER FÜR EINEN ABGASSTRANG EINES BRENNSTOFFZELLENSYSTEMS**

(71) Anmelder: ContiTech Techno-Chemie GmbH, 61184 Karben (DE)
(72) Erfinder: Sperling, Philipp, 34346 Hann. Münden (DE); Flach, Axel, 34346 Hann. Münden (DE); Linzmaier, Markus, 61184 Karben (DE); Petz, Erik, 445100 Carei (RO); Wagner, Florian, 34346 Hann. Münden (DE)
(74) Vertreter: Bird & Bird LLP - Hamburg

(57) **Zusammenfassung**

Die Erfindung betrifft einen Schalldämpfer mit einer durch ein Gehäuse (13) zumindest teilweise begrenzten Kavität (10), einer innerhalb der Kavität (10) angeordneten Schalldämpfvorrichtung (20) zur Reduzierung eines Geräusches des Abgasstroms (S) und einer innerhalb der Kavität (10) stromaufwärts der Schalldämpfvorrichtung (20) angeordneten Wasserabscheidevorrichtung (30) zur Abtrennung von Wasser aus dem Abgasstrom (S). In einer Schalldämpfkammer (21) ist eine Strömungsleitvorrichtung (23) angeordnet, die ein Aufweitungselement (231) zur radialen Aufweitung zumindest eines Teils des durch die Eintrittsöffnung (211) strömenden Abgasstroms (S) aufweist und einen Rückströmungskanal (230) ausbildet, innerhalb dessen ein Strömungspfad für den Abgasstrom (S) bereitgestellt wird, dessen Strömungsrichtung (SR) entgegengesetzt zur Hauptströmungsrichtung (R) verläuft.

## Beschreibung

Die vorliegende Erfindung betrifft einen Schalldämpfer für einen Abgasstrang eines Brennstoffzellensystems mit den Merkmalen des Anspruchs 1. Ferner betrifft die Erfindung ein Brennstoffzellensystem mit den Merkmalen des Anspruchs 15.

Eine Brennstoffzelle wandelt die chemische Reaktionsenergie eines kontinuierlich zugeführten Brennstoffes, z.B. Wasserstoff, und eines Oxidationsmittels, z.B. Sauerstoff, in elektrische Energie um. Brennstoffzellen werden beispielsweise in Brennstoffzellenfahrzeugen eingesetzt, um die erzeugte elektrische Energie direkt mittels eines Elektroantriebs in Bewegung umzuwandeln oder in einer Antriebsbatterie zeitweise zwischenzuspeichern. Brennstoffzellen können außer Wasserstoff auch andere Brennstoffe nutzen, insbesondere Methanol, Butan oder Erdgas.

Zur Zuführung des Brennstoffs und des Oxidationsmittels werden in einem Brennstoffzellensystem mehrere mechanische Vorrichtungen verwendet, die im Betrieb mit einer Geräuschentwicklung einhergehen, die als störend empfunden werden kann. Um die im Brennstoffzellensystem erzeugten Geräusche zu verringern, werden Schalldämpfer in dem Brennstoffzellensystem, z.B. in einem Abgasstrang, installiert.

Die in diesem Zusammenhang verwendeten Schalldämpfer können dabei auf dem Reflexionsprinzip oder auf dem Absorptionsprinzip basieren. Ein Reflexionsschalldämpfer besteht aus einer oder mehreren Kammern, in denen sich der Schall ausbreiten kann. Die Schallwellen können dabei an Querschnittsänderungen und an offenen Rohr- bzw. Kanalenden reflektiert werden, wodurch ein Teil der Schallenergie verloren geht. Eine Art von Reflexionsschalldämpfer kann beispielsweise mehrere Kammern unterschiedlicher Größe, die untereinander z.B. durch ein sich durch die Kammern erstreckendes perforiertes Rohr verbunden sind. Die Schallwellen werden in den Kammern reflektiert. Durch die Koppelung der einzelnen Kammern entstehen sogenannte Resonatoren, in denen die Schallwellen reflektiert werden, sich nach dem Interferenzprinzip teilweise gegenseitig auslöschen und somit gedämpft werden. Einzelne Kammern können dabei durch ihre Größe und/oder das Lochmuster der Perforation im Rohr an einen bestimmten zu dämpfenden Frequenzbereich angepasst werden. Je größer die Anzahl der vorhandenen Kammern, desto effizienter wird in der Regel die Dämpfung. Eine andere Art von Reflexionsschalldämpfer kann mehrere abschnittsweise ineinander gesteckte Rohre aufweise, wobei die zwischen den Rohren vorhandenen Ringspalte einen labyrinthartigen Ausbreitungspfad für die Schallwellen ausbilden, entlang dem ein Teil der Schallenergie abgegeben werden kann. Ein Absorptionsschalldämpfer hat in der Regel nur eine Kammer, in der ein perforiertes Rohr verläuft. Die Kammer ist mit einem schallabsorbierenden Material, z.B. einer langfaserigen Mineralwolle, gefüllt. Die Schallwellen dringen durch das perforierte Rohr in das schallabsorbierende Material ein und werden durch Reibungseffekte in Wärme umgewandelt. Die erzielte Dämpfung hängt von dem verwendeten Material, der Stopfdichte, der Länge und der Schichtdicke der Kammer ab.

Das bei der Stromerzeugungsreaktion in einer Wasserstoff-Sauerstoff-Brennstoffzelle entstehende Abgas, das insbesondere von der Kathode der Brennstoffzelle abgeführt wird, enthält Wasser (meist in Form von Wasserdampf und Wassertröpfchen) und hat eine Abgastemperatur im Bereich von 80 °C. Dadurch, dass die Abgastemperatur unterhalb der Siedetemperatur des Wassers liegt, lässt sich das Wasser nur schlecht verdampfen und abführen. Dringt allerdings zu feuchtes Abgas in den Schalldämpfer ein, kondensiert der Wasserdampf insbesondere an den Oberflächen des Schalldämpfers, was negative Auswirkungen auf die Funktion des Schalldämpfers hat - unabhängig davon, ob dieser auf dem Reflexionsprinzip oder dem Absorptionsprinzip basiert. In ungünstigen Fällen bewirkt die sich in dem Schalldämpfer angesammelte Feuchtigkeit eine zusätzliche Geräuschentwicklung, das als unangenehm empfunden wird.

Um diesem Problem entgegenzuwirken, wird in der US 2013 175114 A1 ein hybrider Schalldämpfer vorgeschlagen, bei dem einer auf dem Reflexionsprinzip basierenden Schalldämpfvorrichtung eine Entfeuchtungskammer vorgeschaltet ist, die im Wesentlichen vollständig mit einem wasserabsorbierenden Material gefüllt ist. Um eine geeignete Entfeuchtungsfunktion zu gewährleisten, muss die Entfeuchtungskammer allerdings ein wesentlich größeres Volumen aufweisen als die Schalldämpfervorrichtung. Trotzdem kann das Abgas in der Entfeuchtungskammer lediglich zu einem gewissen Grad entfeuchtet werden, so dass das sich in der Schalldämpfervorrichtung weiterhin bildende Kondensat durch einen in die Schalldämpfervorrichtung hineinragenden Teil des wasserabsorbierenden Materials aufgenommen werden muss. Überdies lässt sich das durch das wasserabsorbierende Material aufgenommene Wasser nicht in einfacher Weise abführen, sondern muss in der Regel mithilfe einer Pumpe abgesaugt werden. Insgesamt ergibt sich daher ein relativ komplexer Aufbau des hybriden Schalldämpfers, der relativ viel Bauraum einnimmt und aufwendig in der Herstellung und im Betrieb ist.

Aufgabe der vorliegenden Erfindung ist es daher, einen Schalldämpfer für einen Abgasstrang eines Brennstoffzellensystems bereitzustellen, mit dem eine zuverlässige Verringerung der mit dem Betrieb des Brennstoffzellensystems verbundenen Geräusche unter zumindest teilweiser Vermeidung der Nachteile des Standes der Technik erreicht werden kann. Zumindest soll eine Alternative zu bestehenden Lösungen geschaffen werden. Ferner ist es Aufgabe der vorliegenden Erfindung, ein Brennstoffzellensystem mit einem solchen Schalldämpfer bereitzustellen.

Diese Aufgabe wird durch einen Schalldämpfer mit den Merkmalen des Anspruchs 1 sowie ein Brennstoffzellensystem mit den Merkmalen des Anspruchs 15 gelöst. Bevorzugte Merkmale sind Gegenstand der abhängigen Ansprüche. Weitere Vorteile und Merkmale sind der allgemeinen Beschreibung sowie den Ausführungsbeispielen zu entnehmen.

Der erfindungsgemäße Schalldämpfer für einen Abgasstrang eines Brennstoffzellensystems weist eine Kavität auf, durch die ein Abgasstrom des Brennstoffzellensystems entlang eines Strömungspfades von einer Einlassöffnung der Kavität zu einer Auslassöffnung der Kavität strömen kann. Ferner weist der Schalldämpfer eine innerhalb der Kavität angeordnete Schalldämpfvorrichtung zur Reduzierung eines Geräusches des Abgasstroms auf, wobei die Schalldämpfvorrichtung eine sich entlang einer Längsrichtung erstreckende und von einer Innenwand des Gehäuses radial begrenzte Schalldämpfkammer aufweist, durch die der Abgasstrom von einer Eintrittsöffnung zu einer Austrittsöffnung der Schalldämpfkammer strömen kann. Innerhalb der Schalldämpfkammer ist eine Strömungsleitvorrichtung angeordnet, die ein stromabwärts der Eintrittsöffnung angeordnetes Aufweitungselement zur radialen Aufweitung zumindest eines Teils des durch die Eintrittsöffnung strömenden Abgasstroms in Richtung der Innenwand aufweist. Ferner bildet die Strömungsleitvorrichtung stromabwärts des Aufweitungselements einen Rückströmungskanal aus, innerhalb dessen ein Strömungspfad für den Abgasstrom bereitgestellt wird, dessen Strömungsrichtung entgegengesetzt zur Hauptströmungsrichtung verläuft. Der Schalldämpfer weist zudem eine Wasserabscheidevorrichtung zur Abtrennung von Wasser aus dem Abgasstrom auf. Die Wasserabscheidevorrichtung weist zumindest eine Wasserabscheidekammer auf und ist ebenfalls innerhalb der Kavität und stromaufwärts der Schalldämpfvorrichtung angeordnet, so dass der durch die Einlassöffnung einströmende Abgasstrom zuerst die Wasserabscheidevorrichtung, insbesondere die gesamte Wasserabscheidevorrichtung, passieren muss, bevor der Abgasstrom in die Schalldämpfvorrichtung strömt.

Der Abgasstrom, der beispielsweise von der Kathode einer Brennstoffzelle des Brennstoffzellensystems abgeführt und dem Schalldämpfer mittelbar oder unmittelbar zugeführt wird, kann durch die Eintrittsöffnung der Kavität in die Wasserabscheidekammer strömen. Insbesondere bildet die Eintrittsöffnung der Kavität gleichzeitig die Eintrittsöffnung der Wasserabscheidekammer. Der Abgasstrom wird in der Wasserabscheidekammer entfeuchtet, so dass eine Beeinträchtigung der Funktion der stromabwärts angeordneten Schalldämpfervorrichtung durch zu feuchtes Abgas verringert oder gänzlich verhindert wird. Das kondensierte Wasser sammelt sich je nach Einbauposition des Schalldämpfers aufgrund der Gravitation in einen vorbekannten Bereich der Wasserabscheidekammer und kann von dort in einfacher Weise aktiv oder passiv abgeführt werden.

Unter "Wasserabscheidevorrichtung" ist eine Vorrichtung zu verstehen, die primär der Abtrennung von Wasser (und/oder einer anderen Flüssigkeit) aus dem Abgas dient. Eine Schalldämpfvorrichtung ist somit nicht als Wasserabscheidevorrichtung anzusehen, selbst wenn es in der Schalldämpfkammer ebenfalls zu einer gewissen Kondensation und Abführung von Feuchtigkeit kommt.

Durch die konstruktive Ausgestaltung der Schalldämpfvorrichtung bildet diese einen Reflexionsschalldämpfer aus. Die Strömungsleitvorrichtung bildet einen labyrinthartigen Ausbreitungspfad für den Abgasstrom aus, entlang dem der Abgasstrom zumindest zwei Mal umgelenkt wird, wobei ihm ein Teil der Schallenergie entzogen wird. Bevorzugt ist das Aufweitungselement fluchtend mit der Eintrittsöffnung angeordnet. Das Aufweitungselement kann perforiert oder nicht perforiert sein.

Die Begriffe stromaufwärts oder stromabwärts beziehen sich stets auf Hauptströmungsrichtung.

In einer bevorzugten Ausgestaltung des erfindungsgemäßen Schalldämpfers weist die Strömungsleitvorrichtung einen stromaufwärts der Austrittsöffnung der Schalldämpfkammer angeordneten ersten Rohrabschnitt auf, der in die Austrittsöffnung mündet. Mit dieser simplen konstruktiven Ausgestaltung kann ein Strömungspfad für den Abgasstrom in einfacher Weise verlängert werden. Der erste Rohrabschnitt weist dabei bevorzugt eine Länge auf, die einem Drittel bis zwei Drittel der Gesamtlänge der Schalldämpfkammer entspricht.

In einer weiteren bevorzugten Ausgestaltung des erfindungsgemäßen Schalldämpfers ist das Aufweitungselement auf seiner stromabwärts gelegenen Seite mit einem zweiten Rohrabschnitt der Strömungsleitvorrichtung verbunden, wobei der zweite Rohrabschnitt ausgebildet ist, mit seiner Außenfläche einen Ringspalt für den durch das Aufweitungselement aufgeweiteten Teil des Abgasstroms von innen zu begrenzen. Mit dieser simplen konstruktiven Ausgestaltung kann ein insbesondere umlaufender äußerer Strömungskanal ausgebildet werden, der den Abgasstrom nah an der Innenwand des Gehäuses entlangführt. Auf diese Weise entsteht hinter dem Aufweitungselement und innerhalb des Rohrabschnitts ein Bauraum, in dem der Abgasstrom in zur Hauptströmungsrichtung entgegengesetzter Richtung geführt werden kann.

Insbesondere weisen der erste Rohabschnitt und/oder der zweite Rohrabschnitt entlang der Längsrichtung einen konstanten oder veränderlichen Durchmesser auf. Bevorzugt sind der erste Rohrabschnitt und/oder der zweite Rohrabschnitt koaxial zueinander angeordnet.

In einer weiteren bevorzugten Ausgestaltung des erfindungsgemäßen Schalldämpfers umgibt der zweite Rohrabschnitt den ersten Rohrabschnitt zumindest teilweise, derart, dass der Rückströmungskanal in einem Längsabschnitt der Schalldämpfkammer zwischen den Rohrabschnitten ausgebildet ist. Der Rückströmungskanal kann ein von einer Außenfläche des ersten Rohrabschnitts und der einer Innenfläche des zweiten Rohrabschnitts begrenzter Ringspalt sein.

Vorzugsweise erstrecken sich die Schalldämpfkammer, das Aufweitungselement, der Rückströmungskanal, der erste Rohrabschnitt und/oder der zweite Rohrabschnitt rotationsymmetrisch um eine gemeinsame Längsmittelachse des Schalldämpfers. Auf diese Weise kann ein besonders kompakter Aufbau realisiert werden.

In einer weiteren bevorzugten Ausgestaltung des erfindungsgemäßen Schalldämpfers ist die die Schalldämpfkammer begrenzende Innenwand mit einer Schicht aus einem schallabsorbierenden Material ausgekleidet. Auf diese Weise wird ein Schalldämpfer geschaffen, der auf einem geringen Bauraum Absorptionsprinzip und Reflektionsprinzip vereint. Der Abgasstrom wird bei Eintritt in die Schallkammer durch das Aufweitungselement zum schallabsorbierenden Material geleitet und kann dort wechselwirken. Die Strecke, über die der Abgasstrom mit dem schallabsorbierenden Material wechselwirkt, kann durch den vorbeschriebenen zweiten Rohrabschnitt, mit dem der Abgasstrom nah an der Innenwand geführt wird, weiter verlängert werden. Die Schicht aus schallabsorbierendem Material kann durch eine fluiddurchlässige Haltestruktur, aufweisend ein oder mehrere Stützelemente, im Nahbereich der Innenwand gehalten werden. In einer Ausführungsform kann die Schicht aus schallabsorbierendem Material zwischen der Innenwand und einem perforierten Rohr als Haltestruktur angeordnet sein. In einer alternativen Ausführungsform kann die Schicht aus schallabsorbierendem Material durch eine Gitterstruktur oder ein Drahtgeflecht als Haltestruktur im Nahbereich der Innenwand gehalten werden. Die Schicht aus schallabsorbierendem Material erstreckt sich dabei bevorzugt entlang der gesamten Länge der Schalldämpfkammer vollumfänglich um die Strömungsleitvorrichtung herum.

In einer weiteren bevorzugten Ausgestaltung des erfindungsgemäßen Schalldämpfers weist das Aufweitungselement einen perforierten Bereich auf, der gegenüber der Eintrittsöffnung fluchtend angeordnet ist. Hierdurch kann ein geringer Anteil des Abgasstroms durch das Aufweitungselement hindurchströmen, was den Strömungswiderstand der Strömungsleitvorrichtung senkt. Bevorzugt ist stromabwärts des perforierten Bereichs eine weitere Schicht aus schallabsorbierendem Material angeordnet ist. Auf diese Weise kann der durch das Aufweitungselement strömende Anteil des Abgasstroms mit schalldämpfenden Material wechselwirken. Bevorzugt fluchtet die Schicht aus schallabsorbierendem Material mit dem perforierten Bereich. Insbesondere grenzt die Schicht aus schallabsorbierendem Material unmittelbar an den perforierten Bereich an.

In einer weiteren bevorzugten Ausgestaltung des erfindungsgemäßen Schalldämpfers weist die Schalldämpfvorrichtung stromabwärts der Schalldämpfkammer eine sich entlang der Längsrichtung erstreckende und von der Innenwand des Gehäuses radial begrenzte weitere Schalldämpfkammer auf, durch die der Abgasstrom von einer Eintrittsöffnung zu einer Austrittsöffnung der weiteren Schalldämpfkammer strömen kann, wobei innerhalb der weiteren Schalldämpfkammer eine weitere Strömungsleitvorrichtung angeordnet ist, wobei die weitere Strömungsleitvorrichtung ein stromabwärts der Eintrittsöffnung angeordnetes weiteres Aufweitungselement zur radialen Aufweitung zumindest eines Teils des durch die Eintrittsöffnung strömenden Abgasstroms in Richtung der Innenwand aufweist, wobei die weitere Strömungsleitvorrichtung stromabwärts des weiteren Aufweitungselements einen weiteren Rückströmungskanal ausbildet, innerhalb dessen ein weiterer Strömungspfad für den Abgasstrom bereitgestellt wird, dessen Strömungsrichtung entgegengesetzt zur Hauptströmungsrichtung verläuft. Die zusätzliche Strömungsleitvorrichtung verstärkt die Schalldämpfung nach dem Reflexionsprinzip, was zu einer hervorragenden Geräuschminderung beiträgt.

Die zusätzliche Strömungsleitvorrichtung kann ähnlich wie die zuvor beschriebene Strömungsleitvorrichtung gestaltet werden, um die entsprechenden Vorteile zu erzielen.

In einer weiteren bevorzugten Ausgestaltung des erfindungsgemäßen Schalldämpfers weist die weitere Strömungsleitvorrichtung einen stromaufwärts der Austrittsöffnung der weiteren Schalldämpfkammer angeordneten ersten Rohrabschnitt auf, der in die Austrittsöffnung mündet. Der erste Rohrabschnitt weist dabei bevorzugt eine Länge auf, die einem Drittel bis zwei Drittel der Gesamtlänge der weiteren Schalldämpfkammer entspricht.

In einer weiteren bevorzugten Ausgestaltung des erfindungsgemäßen Schalldämpfers ist das Aufweitungselement der weiteren Strömungsleitvorrichtung auf seiner stromabwärts gelegenen Seite mit einem zweiten Rohrabschnitt der weiteren Strömungsleitvorrichtung verbunden, wobei der zweite Rohrabschnitt ausgebildet ist, mit seiner Außenfläche einen Ringspalt für den durch das Aufweitungselement aufgeweiteten Teil des Abgasstroms von innen zu begrenzen.

In einer weiteren bevorzugten Ausgestaltung des erfindungsgemäßen Schalldämpfers weisen der erste Rohabschnitt und/oder der zweite Rohrabschnitt der weiteren Schalldämpfvorrichtung entlang der Längsrichtung einen konstanten oder veränderlichen Durchmesser auf. Bevorzugt sind der erste Rohrabschnitt und/oder der zweite Rohrabschnitt der weiteren Schalldämpfvorrichtung koaxial zueinander angeordnet.

In einer weiteren bevorzugten Ausgestaltung des erfindungsgemäßen Schalldämpfers umgibt der zweite Rohrabschnitt der weiteren Schalldämpfvorrichtung den ersten Rohrabschnitt der weiteren Schalldämpfvorrichtung zumindest teilweise, derart, dass der Rückströmungskanal in einem Längsabschnitt der weiteren Schalldämpfkammer zwischen den Rohrabschnitten ausgebildet ist. Der Rückströmungskanal kann ein von einer Außenfläche des ersten Rohrabschnitts und der einer Innenfläche des zweiten Rohrabschnitts begrenzter Ringspalt sein.

Vorzugsweise erstrecken sich die weitere Schalldämpfkammer sowie das Aufweitungselement, der Rückströmungskanal, der erste Rohrabschnitt und/oder der zweite Rohrabschnitt der weiteren Schalldämpfvorrichtung rotationsymmetrisch um die gemeinsame Längsmittelachse des Schalldämpfers.

In einer weiteren bevorzugten Ausgestaltung des erfindungsgemäßen Schalldämpfers ist die weitere Schalldämpfkammer begrenzende Innenwand mit einer Schicht aus einem schallabsorbierenden Material ausgekleidet. Der Abgasstrom wird bei Eintritt in die weitere Schallkammer durch das Aufweitungselement zum schallabsorbierenden Material geleitet und kann dort wechselwirken. Die Strecke, über die der Abgasstrom mit dem schallabsorbierenden Material wechselwirkt, kann durch den vorbeschriebenen zweiten Rohrabschnitt, mit dem der Abgasstrom nah an der Innenwand geführt wird, weiter verlängert werden. Die Schicht aus schallabsorbierendem Material kann durch eine fluiddurchlässige Haltestruktur, aufweisend ein oder mehrere Stützelemente, im Nahbereich der Innenwand gehalten werden. In einer Ausführungsform kann die Schicht aus schallabsorbierendem Material zwischen der Innenwand und einem perforierten Rohr als Haltestruktur angeordnet sein. In einer alternativen Ausführungsform kann die Schicht aus schallabsorbierendem Material durch eine Gitterstruktur oder ein Drahtgeflecht als Haltestruktur im Nahbereich der Innenwand gehalten werden. Die Schicht aus schallabsorbierendem Material erstreckt sich dabei bevorzugt entlang der gesamten Länge der weiteren Schalldämpfkammer vollumfänglich um die weitere Strömungsleitvorrichtung herum. Durch diese Konstruktion mit zumindest zwei mit schallabsorbierendem Material ausgekleideten Schalldämpfkammern wird der Abgasstrom über eine längere Strecke entlang des absorbierenden Materials geleitet, was zu einer optimalen Geräuschdämpfung führt.

In einer weiteren bevorzugten Ausgestaltung des erfindungsgemäßen Schalldämpfers weist das Aufweitungselement der weiteren Schalldämpfvorrichtung einen perforierten Bereich auf, der gegenüber der Eintrittsöffnung fluchtend angeordnet ist. Hierdurch kann ein geringer Anteil des Abgasstroms durch das Aufweitungselement hindurchströmen, was den Strömungswiderstand der Strömungsleitvorrichtung senkt. Bevorzugt ist stromabwärts des perforierten Bereichs eine weitere Schicht aus schallabsorbierendem Material angeordnet ist. Auf diese Weise kann der durch das Aufweitungselement strömende Anteil des Abgasstroms mit schalldämpfenden Material wechselwirken. Bevorzugt fluchtet die Schicht aus schallabsorbierendem Material mit dem perforierten Bereich. Insbesondere grenzt die Schicht aus schallabsorbierendem Material unmittelbar an den perforierten Bereich an.

In einer weiteren bevorzugten Ausgestaltung des erfindungsgemäßen Schalldämpfers weist die Wasserabscheidevorrichtung ein in der Wasserabscheidekammer angeordnetes Prallelement zur radialen Aufweitung eines durch die Eintrittsöffnung einströmenden Abgasstroms sowie stromabwärts des Prallelements ein trichterförmiges Leitelement zur radialen Verjüngung des durch das Prallelement aufgeweiteten Abgasstroms auf.

In der Wasserabscheidekammer wird der Abgasstrom durch das Prallelement zunächst aufgeweitet und anschließend durch das stromabwärts angeordnete trichterförmige Leitelement wieder verjüngt, bevor der Abgasstrom dem Schalldämpfer zugeführt wird. Auf diese Weise wird der Abgasstrom in der Wasserabscheidekammer an einer möglichst großen Oberfläche entlanggeführt, an der im Abgas enthaltenes Wasser kondensieren kann. Das Wasser kann hierbei an dem Prallelement, an dem trichterförmigen Leitelement und an einer die Wasserabscheidekammer begrenzenden Wandung, insbesondere einer Wandung eines Gehäuses des Schalldämpfers, kondensieren. Dadurch wird ein hoher Entfeuchtungsgrad erzielt, so dass eine Beeinträchtigung der Funktion der stromabwärts angeordneten Schalldämpfervorrichtung durch zu feuchtes Abgas verringert oder gänzlich verhindert wird. Durch die konstruktive Ausgestaltung der Wasserabscheidekammer kann auf wasserabsorbierendes Material verzichtet werden, was den konstruktiven Aufbau des Schalldämpfers vereinfacht.

Vorzugsweise weist das Prallelement einen von seinem stromaufwärts gelegenen Ende zu seinem stromabwärts gelegenen Ende einen insbesondere stetig zunehmenden Querschnitt auf. Hierdurch erfolgt eine graduelle radiale Aufweitung des Abgasstroms an den Außenflächen des Prallelements. Zur Begünstigung einer gleichmäßigen und geräuscharmen Strömung kann das Prallelement zumindest teilweise rotationssymmetrisch ausgebildet sein. Das Prallelement kann hierbei einen kegelförmigen, kegelstumpfförmigen oder paraboloidförmigen Strömungskörper aufweisen. Das stromaufwärts gelegene Ende des Prallelements kann als insbesondere abgerundete Spitze ausgebildet sein. Bevorzugt ist das Prallelement hohl - z.B. in Form einer mit ihrer Spitze zur Einlassöffnung ausgerichteten Kappe - ausgebildet, was die Materialkosten und das Gewicht des Schalldämpfers verringert.

Das trichterförmige Leitelement begrenzt von seinem stromaufwärts gelegenen Ende zu seinem stromabwärts gelegenen Ende einen Strömungskanal mit insbesondere stetig abnehmendem Strömungsquerschnitt. Auf diese Weise wird der durch das Prallelement aufgeweitete Abgasstrom wieder eingefangen, wobei durch die Trichterform die Entstehung von Verwirbelungen - wie sie häufig im Bereich spitzer Ecken auftreten - verringert oder sogar vermieden wird. Hierdurch lässt sich ein Druckverlust im Schalldämpfer verringern. Ferner kann an das an dem trichterförmigen Leitelement kondensierte Wasser gravitationsbedingt an der Oberfläche des Leitelements entlangrutschen und auf diese Weise z.B. einer Abflussöffnung in der Wasserabscheidekammer abgeführt werden. Zur Begünstigung einer laminaren und geräuscharmen Strömung kann das trichterförmige Leitelement rotationssymmetrisch ausgebildet sein. Insbesondere weist das trichterfömrige Leitelement eine konkave Oberfläche auf, an der der Abgasstrom entlangströmen kann. Dies begünstigt eine laminare und geräuscharme Strömung und vergrößert die zur Verfügung stehende Kondensationsoberfläche. Insbesondere sind Prallelement und trichterförmiges Leitelement in Längsrichtung des Schalldämpfers bzw. in Hauptströmungsrichtung des Abgasstroms voneinander beabstandet.

In einer bevorzugten Ausgestaltung des erfindungsgemäßen Schalldämpfers ist der Querschnitt des Prallelements an seinem stromabwärts gelegenen Ende größer als der Strömungsquerschnitt der Einlassöffnung. Auf diese Weise wird der Abgasstrom in ein großes Volumen aufgeweitet und kann entlang einer großen Kondensationsoberfläche geführt werden.

In einer weiteren bevorzugten Ausgestaltung des erfindungsgemäßen Schalldämpfers ist das Prallelement zur Erzeugung eines Dralls in dem Abgasstrom ausgebildet. Bevorzugt weist das Prallelement hierzu ein oder mehrere Leitelemente, auf, z.B. in Form von Leitschaufeln, die durch ihre Formgebung den an dem Prallelement entlangströmenden Abgasstrom in eine Drallbewegung um eine parallel zur Längsrichtung des Schalldämpfers bzw. zur Hauptströmungsrichtung des Abgasstroms verlaufende Rotationsachse versetzen. Durch die Drallbewegung wird der Strömungspfad des Abgasstroms gekrümmt und somit verlängert, wodurch eine Entfeuchtung weiter begünstigt wird. Alternativ oder zusätzlich kann das Prallelement auch eine oder mehrere Vertiefungen als Leitelemente aufweisen.

Vorzugsweise ist das trichterförmige Leitelement zur Zuführung des verjüngten Abgasstroms zur Schalldämpfervorrichtung ausgebildet. Auf diese Weise ist ein besonders kompakter Aufbau des Schalldämpfers realisierbar, bei dem auf weitere Strukturen zur Zuführung des Abgasstroms verzichtet werden kann.

In einer weiteren bevorzugten Ausgestaltung des erfindungsgemäßen Schalldämpfers bildet das trichterförmige Leitelement eine Trennwand zwischen der Wasserabscheidekammer und der Schalldämpfkammer aus. Auf diese Weise wird eine Abtrennung der beiden Kammern zumindest teilweise, vorzugsweise vollständig durch ein und dieselbe Struktur erreicht, wodurch ein besonders kompakter Aufbau des Schalldämpfers insbesondere mit einem unmittelbaren Übergang von Wasserabscheidekammer zur Schalldämpfkammer realisierbar ist.

In einer weiteren bevorzugten Ausgestaltung des erfindungsgemäßen Schalldämpfers weist der Schalldämpfer ein die Wasserabscheidekammer in zwei Teilkammern aufteilendes bzw. trennendes Kondensationssieb auf. Auf diese Weise wird der Abgasstrom gezwungen, das in der Wasserabscheidekammer angeordnete Kondensationssieb zu passieren. Das in dem Abgasstrom enthaltene Wasser kann an dem Siebbelag kondensieren, wodurch der Entfeuchtungsgrad der Wasserabscheidevorrichtung weiter erhöht wird. Insbesondere bildet ein Geflecht, Drahtgewebe, Drahtgitter und/oder Lochblech den Siebbelag aus. Bevorzugt hat das Kondensationssieb eine Maschenweite von mindestens 160 µm, bevorzugt mindestens 300 µm, besonders bevorzugt mindestens 500 µm, und maximal 1000 µm, bevorzugt maximal 900 µm. Es hat sich überraschenderweise herausgestellt, dass mit derartigen Maschenweiten gute Entfeuchtungsergebnisse erzielt werden können. Vorzugsweise ist das Kondensationssieb stromabwärts des Prallelements angeordnet, so dass der Abgasstrom bereits aufgeweitet und an einer möglichst großen Kondensationsoberfläche entlanggeführt wird, bevor er auf das Kondensationssieb auftrifft. Besonders bevorzugt ist das Kondensationssieb zumindest teilweise innerhalb des trichterförmigen Leitelements angeordnet. Auf diese Weise wird der Abgasstrom von dem trichterförmigen Leitelement auf das Kondensationssieb gerichtet und vor dem Passieren des Kondensationssiebes verdichtet, so dass ein Druckverlust durch den Strömungswiderstands des Kondensationssiebes verringert wird. Vorzugsweise ist das Kondensationssieb zylindermantelförmig ausgebildet. Mit dieser einfachen konstruktiven Ausgestaltung kann das Kondensationssieb optimal in der Wasserabscheidekammer zwischen dem Prallelement und dem trichterförmigen Leitelement positioniert werden. Bevorzugt ist das Kondensationssieb an einer das Prallelement von dem trichterförmigen Leitelement beabstandenden Stützkonstruktion gelagert. Die Stützkonstruktion kann ein oder mehrere sich in Längsrichtung des Schalldämpfers bzw. in Hauptströmungsrichtung des Abgasstroms erstreckende Stützelemente (z.B. in Form Stützstreben) aufweisen. Vorzugsweise weist der Schalldämpfer zumindest ein Heizelement zum Beheizen des Kondensationssiebes auf. Auf diese Weise wird sichergestellt, dass das engmaschige Kondensationssieb bei niedrigen Außentemperaturen nicht einfriert. Um eine günstige Heizleistung bereitzustellen, ist das zumindest eine Heizelement zum Beheizen des Kondensationssiebes bevorzugt an oder in der Stützkonstruktion angeordnet, an der das Kondensationssieb gelagert ist. Vorzugsweise weist das trichterförmige Leitelement einen Bypass auf, der unter Umgehung des Kondensationssiebes einen Strömungspfad von der Wasserabscheidekammer in die Schalldämpfkammer bereitstellt. Der Bypass ist dabei bevorzugt so dimensioniert, dass er im Fall, dass das Kondensationssieb verstopft ist (z.B. durch gefrorenes Kondensat), einen Ausweichkanal für den Abgasstrom bietet.

In einer weiteren bevorzugten Ausgestaltung des erfindungsgemäßen Schalldämpfers erstreckt sich die Kavität entlang einer Längsmittelachse und insbesondere rotationssymmetrisch um die Längsmittelachse, wobei die Wasserabscheidevorrichtung und die Schalldämpfvorrichtung zentriert zur Längsmittelachse angeordnet sind. Somit muss der Abgasstrom beim Übergang von der Wasserabscheidevorrichtung in die Schalldämpfvorrichtung seine Strömungsrichtung nur geringfügig ändern, wodurch eine gleichmäßige und geräuscharme Strömung des Abgasstroms begünstigt wird. Ferner kann auf diese Weise ein kompakter Aufbau des Schalldämpfers realisiert werden. Insbesondere sind die Einlassöffnung und die Auslassöffnung zentriert zur Längsmittelachse angeordnet. Bevorzugt ist die Kavität zumindest teilweise, bevorzugt vollständig, zylindrisch oder aus mehreren koaxial zueinander ausgerichteten zylindrischen Teilkavitäten ausgebildet.

In einer weiteren bevorzugten Ausgestaltung des erfindungsgemäßen Schalldämpfers weist der Schalldämpfer ein die Kavität zumindest teilweise begrenzendes Gehäuse auf, wobei das Gehäuse zumindest die Mantelfläche(n) der Kavität begrenzt, wobei der Schalldämpfer eine aus Modulen zusammenbaubar oder einstückig ausgebildete Struktur aufweist, die als Ganzes in das Gehäuse einsetzbar ist, wobei die Struktur zusammen mit dem Gehäuse die Wasserabscheidevorrichtung und die Schalldämpfvorrichtung ausbildet. Das Gehäuse kann dabei zumindest eine Einsetzöffnung freigeben, durch die die Struktur in das Gehäuse eingesetzt werden kann. Die Einsetzöffnung kann mittels eines separaten Deckels verschließbar sein. Alternativ kann ein Teil der Struktur den Deckel ausbilden und bei in dem Gehäuse eingesetzter Struktur die Einsetzöffnung verschließen. Insbesondere weist die Struktur das Prallelement, das trichterförmige Leitelement und die Strömungsleitvorrichtung. Die Struktur kann z.B. eine Stützkonstruktion aufweisen, die das Prallelement von dem trichterförmigen Leitelement beabstandet an dem trichterförmigen Leitelement befestigt und/oder die Strömungsleitvorrichtung an dem trichterförmigen Leitelement befestigt.

Vorzugsweise besteht das Gehäuse und/oder die Struktur überwiegend aus einem Werkstoff, das einen Thermoplasten aufweist.

In einer weiteren bevorzugten Ausgestaltung des erfindungsgemäßen Schalldämpfers weist der Schalldämpfer eine die Wasserabscheidekammer zumindest teilweise umgebende Wasserauffangkammer auf, die über eine Abflussöffnung derart mit der Wasserabscheidekammer in fluidleitender Verbindung steht, dass aus dem Abgasstrom abgeschiedenes Wasser aus der Wasserabscheidekammer, insbesondere gravitationsbedingt selbstständig, in die Wasserauffangkammer abfließen und dort aufgefangen werden kann. Auf diese Weise wird das abgeschiedene Wasser aus der Wasserabscheidekammer abgeführt, wodurch eine Wasseransammlung in der Wasserabscheidevorrichtung vermieden wird, die sich sonst negativ auf die Entfeuchtung auswirken könnte. Ferner wird verhindert, das angesammeltes Wasser durch den Abgasstrom in Richtung der Schalldämpfvorrichtung transportiert wird und deren Funktion beeinträchtigt. Eine zuverlässige Abführung von Wasser aus der Wasserabscheidekammer ist für die Funktion des Schalldämpfers entscheidend, da z.B. bei Volllastfahrt einer 100 kW-Brennstoffzelle bereits etwa 0,5 L Wasser aus dem Abgas abgeschieden werden kann. Das in der Wasserauffangkammer aufgefangene Wasser kann in einfacher Weise z.B. über eine Abführöffnung aktiv - z.B. durch eine Pumpe - oder passiv - z.B. gravitationsbedingt selbstständig - aus der Wasserauffangkammer abgeführt werden. Die Wasserauffangkammer muss lediglich einen kleinen Bereich der Wasserabscheidekammer umgeben - z.B. einen bezüglich der Gravitationsrichtung unten liegenden Bereich. Die Wasserauffangkammer kann somit ein wesentlich geringeres Innenvolumen aufweisen als die Wasserabscheidekammer. Vorzugsweise sind die Kavität und die Wasserauffangkammer durch eine Wandung der Kavität getrennt, wodurch ein kompakter Aufbau des Schalldämpfers erreicht wird.

In einer weiteren bevorzugten Ausgestaltung des erfindungsgemäßen Schalldämpfers umgibt die Wasserauffangkammer ferner die Schalldämpfkammer zumindest teilweise und steht über eine Öffnung derart mit der Schalldämpfkammer in fluidleitender Verbindung, dass aus dem Abgasstrom kondensiertes Wasser aus der Schalldämpfkammer, insbesondere gravitationsbedingt selbstständig, in die Wasserauffangkammer abfließen kann. Auf diese Weise wird das abgeschiedene Wasser aus der Schalldämpfkammer abgeführt, wodurch eine Wasseransammlung in der Schalldämpfvorrichtung vermieden wird, die sich sonst negativ auf die Geräuschdämpfung auswirken könnte.

Bevorzugt erstreckt sich die Wasserauffangkammer entlang zumindest der Hälfte der Gesamtlänge, bevorzugt zumindest zwei Drittel der Gesamtlänge der Kavität. Hierdurch wird die Aufnahmekapazität der Wasserauffangkammer begünstigt. Ferner kann ein kompakter Aufbau des Schalldämpfers realisiert werden.

In einer weiteren bevorzugten Ausgestaltung des erfindungsgemäßen Schalldämpfers weist der Schalldämpfer ein Heizelement zum Beheizen zumindest eines Teils einer die Wasserauffangkammer begrenzenden Wandung auf. Auf diese Weise kann eine Abführung des Wassers auch bei niedrigen Außentemperaturen, bei denen mit einem Einfrieren des Kondensats zu rechnen ist, gewährleistet werden. Das Heizelement kann sich dabei entlang zumindest der Hälfte der Gesamtlänge, bevorzugt zumindest zwei Drittel der Gesamtlänge der Wasserauffangkammer erstrecken. Vorzugsweise ist das Heizelement in einem die Abführöffnung umgebenden Bereich der die Wasserauffangkammer begrenzenden Wandung eingebettet.

Der Schalldämpfer kann jeweils im Bereich der Einlassöffnung und im Bereich der Auslassöffnung mit einen Stutzen versehen sein, an den ein Abgasleitungsabschnitt des Abgasstranges befestigt werden kann.

Gemäß dem bereits vor- sowie dem weiter unten nachbeschriebenen wird die eingangs gestellte Aufgabe auch durch ein Brennstoffzellensystem mit den Merkmalen des Anspruchs 15 gelöst.

Das erfindungsgemäße Brennstoffzellensystem weist eine Brennstoffzelle, einen von der Brennstoffzelle abgehenden Abgasstrang sowie ein in dem Abgasstrang installierten erfindungsgemäßen Schalldämpfer auf. Die vor- sowie nachbeschriebenen Vorteile des Schalldämpfers werden auf diese Weise für das Brennstoffzellensystem entsprechend realisiert.

In Laborversuchen hat sich durch Vergleich der relativen Luftfeuchtigkeit sowie der Temperatur an Einlass- und Auslassöffnung herausgestellt, dass der erfindungsgemäße Schalldämpfer in der Lage ist, ca. 75 % bis 80 % der Feuchtigkeit aus dem Abgasstrom abzuscheiden.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand der unabhängigen Ansprüche kombinierbar sind.

Abwandlungen und Ausgestaltungen der Erfindung sowie weitere Vorteile und Einzelheiten der Erfindung lassen sich der nachfolgenden gegenständlichen Beschreibung und den Zeichnungen entnehmen. **In** den schematischen Figuren zeigen:
- Fig. 1: ein Ausführungsbeispiel eines erfindungsgemäßen Brennstoffzellensystems;
- Fig. 2: ein erstes Ausführungsbeispiel eines erfindungsgemäßen Schalldämpfers in einer Schnittdarstellung; und
- Fig. 3: ein Detail des erfindungsgemäßen Schalldämpfers aus Fig. 2 in einer Schnittdarstellung; und
- Fig. 4: ein zweites Ausführungsbeispiel eines erfindungsgemäßen Schalldämpfers in einer Schnittdarstellung; und
- Fig. 5: ein Detail des erfindungsgemäßen Schalldämpfers aus Fig. 4 in einer Schnittdarstellung.

Gleich oder ähnlich wirkende Teile sind - sofern dienlich - mit identischen Bezugsziffern versehen.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

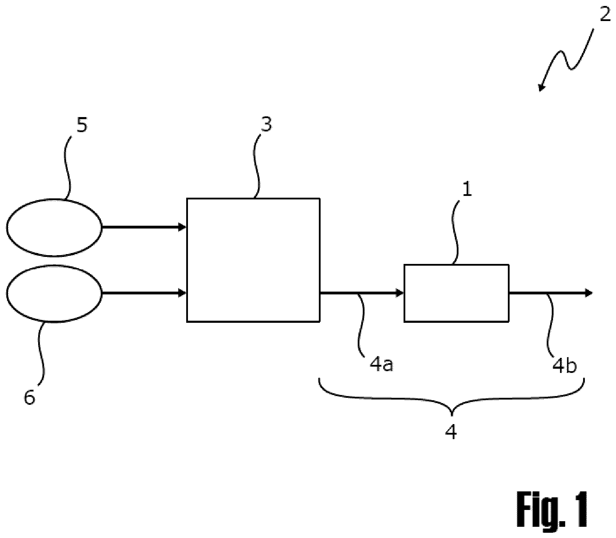

Fig. 1 zeigt ein Ausführungsbeispiel eines erfindungsgemäßen Brennstoffzellensystems 2. Einer Brennstoffzelle 3, im vorliegenden Fall einer Wasserstoff-Sauerstoff-Brennstoffzelle, werden Wasserstoff 5 und sauerstoffhaltige Luft 6 zugeführt. Zur Zuführung der Luft 6 wird häufig ein Kompressor verwendet, dessen Betrieb mit einer erheblichen Geräuschentwicklung einhergeht. Im Abgasstrang 4 des Brennstoffzellensystems 2 ist ein erfindungsgemäßer Schalldämpfer 1 angeordnet. Eine Abgaszuleitung 4a befördert einen Abgasstrom S der Brennstoffzelle 1 zu dem Schalldämpfer 1, während eine Abgasableitung 4a den entfeuchteten und geräuschverminderten Abgasstrom S von dem Schalldämpfer 1 weg befördert - z.B. hin zu einem Endrohr des Abgasstrangs 4.

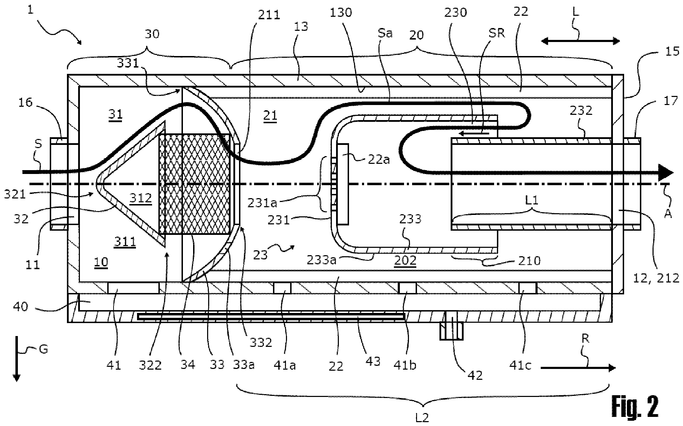

Fig. 2 zeigt ein erstes Ausführungsbeispiel eines erfindungsgemäßen Schalldämpfers 1 für einen Abgasstrang 4 eines Brennstoffzellensystems 2 in einer Schnittdarstellung. Der Schalldämpfer 1 weist eine Kavität 10 auf, durch die ein Abgasstrom S des Brennstoffzellensystems von einer Einlassöffnung 11 zu einer Auslassöffnung 12 strömen kann. Die Position der Einlassöffnung 11 und der Auslassöffnung definieren hierbei eine Hauptströmungsrichtung R, die im vorliegenden Fall parallel zur Längsmittelachse A und zur Längsrichtung L des Schalldämpfers 1 verläuft. Innerhalb der Kavität 10 ist eine Schalldämpfvorrichtung 20 zur Reduzierung eines Geräusches des Abgasstroms S angeordnet. Ferner ist innerhalb der Kavität 10 stromaufwärts der Schalldämpfvorrichtung 20 eine Wasserabscheidevorrichtung 30 zur Abtrennung von Wasser aus dem Abgasstrom S angeordnet, wobei die Wasserabscheidevorrichtung 30 eine Wasserabscheidekammer 31 aufweist. Innerhalb der Wasserabscheidekammer 31 ist ein Prallelement 32 zur radialen Aufweitung des durch die Eintrittsöffnung 11 einströmenden Abgasstromes S angeordnet. Stromabwärts des Prallelements 32 ist ein trichterförmiges Leitelement 33 zur radialen Verjüngung des durch das Prallelement 32 aufgeweiteten Abgasstroms S angeordnet.

Der Abgasstrom S kann von der Brennstoffzelle 3 über eine Abgaszuleitung 4a (Fig. 1) des Abgasstrangs 4, die an dem Einlassstutzen 16 des Schalldämpfers 1 befestigt werden kann, in die Kavität 10 geleitet werden. In der Wasserabscheidekammer 31 wird der Abgasstrom S durch das Prallelement 32 aufgeweitet, und kann somit an einer Innenfläche einer die Wasserabscheidekammer 31 begrenzenden Wandung entlanggeführt werden, bevor der Abgasstrom S durch das stromabwärts angeordnete trichterförmige Leitelement 33 wieder verjüngt wird. Der Abgasstrom S wird dadurch an einer möglichst großen Fläche entlanggeführt, an der im Abgas enthaltenes Wasser kondensieren kann. Der Abgasstrom S wird in hohem Maße entfeuchtet, bevor der Abgasstrom S der Schalldämpfvorrichtung 20 zugeführt wird. Die Funktion der Schalldämpfvorrichtung 20 wird somit nicht durch zu große Feuchtigkeitsmengen beeinträchtigt. Ferner wird eine Geräuschentwicklung durch sich in der Schalldämpfvorrichtung 20 ansammelnde Feuchtigkeit vermieden. Das entfeuchtete und von Geräuschen befreite Abgas kann über eine Abgasableitung 4b (Fig. 1) des Abgasstrangs 4, die an dem Auslassstutzen 17 des Schalldämpfers 1 befestigt werden kann, von dem Schalldämpfer 1 weggeführt werden.

Durch die Form des Prallelements 32, d.h. durch den von seinem stromaufwärts gelegenen Ende 321 zu seinem stromabwärts gelegenen Ende 322 stetig zunehmenden Querschnitt, erfolgt eine graduelle radiale Aufweitung des Abgasstroms S an den Außenflächen des Prallelements 32. Um eine ausreichende radiale Aufweitung des Abgasstroms S zu erzielen, ist der Querschnitt des Prallelements 32 an seinem stromabwärts gelegenen Ende 322 größer als der Strömungsquerschnitt der Einlassöffnung 11. Zur Begünstigung einer gleichmäßigen und geräuscharmen Strömung ist das Prallelement 32 im Wesentlichen um rotationssymmetrisch ausgebildet und weist einen kegelförmigen Strömungskörper mit abgerundeter Spitze auf. Zur Reduktion des Gewichts ist das Prallelement 32 hohl ausgebildet.

Das trichterförmige Leitelement 33 begrenzt von seinem stromaufwärts gelegenen Ende 331 zu seinem stromabwärts gelegenen Ende 332 einen Strömungskanal mit stetig abnehmendem Strömungsquerschnitt. Auf diese Weise wird der durch das Prallelement 32 aufgeweitete Abgasstrom S wieder eingefangen, wobei durch die Trichterform die Entstehung von Verwirbelungen und ein damit einhergehender Druckverlust verringert oder sogar vermieden wird. Zudem kann kondensiertes Wasser gravitationsbedingt an der Oberfläche des Leitelements 33 z.B. in Richtung der Abflussöffnung 41 entlangrutschen und so besser abgeführt werden. Zur Begünstigung einer laminaren und geräuscharmen Strömung ist das trichterförmige Leitelement 33 um die Längsmittelachse A herum rotationssymmetrisch ausgebildet. Das trichterförmige Leitelement 33 eine konkave Oberfläche auf, an der der Abgasstrom S entlangströmen kann. Dies begünstigt eine laminare und geräuscharme Strömung und vergrößert die zur Verfügung stehende Kondensationsoberfläche. Um einen möglichst kompakten Aufbau des Schalldämpfers 1 zu realisieren, bildet das trichterförmige Leitelement 33 eine Trennwand zwischen der Wasserabscheidekammer 31 und einer Schalldämpfkammer 21 der Schalldämpfvorrichtung 30 aus. Prallelement 32 und trichterförmiges Leitelement 33 sind in Längsrichtung des Schalldämpfers 1 bzw. in Hauptströmungsrichtung R des Abgasstroms S voneinander beabstandet. Das trichterförmige Leitelement 33 ist zur Zuführung des verjüngten Abgasstroms S zur Schalldämpfervorrichtung 20 ausgebildet, d.h. das stromabwärtsseitige Ende 332 des trichterförmigen Leitelements 33 schließt unmittelbar an die Schalldämpfkammer 21 an.

Der Schalldämpfer 1 weist ein die Wasserabscheidekammer 31 in zwei Teilkammern 311, 312 trennendes Kondensationssieb 34 auf. Um von der ersten Teilkammer 311 in die zweite Teilkammer zu gelangen, muss der Abgasstrom S das Kondensationssieb 34 passieren, wobei das in dem Abgasstrom S enthaltene Wasser an dem Siebbelag kondensieren kann. Der Siebbelag kann von einem Geflecht, Drahtgewebe, Drahtgitter und/oder Lochblech ausgebildet sein. Das Kondensationssieb 34 ist stromabwärts des Prallelements 32 angeordnet, so dass der Abgasstrom S bereits aufgeweitet und an einer möglichst großen Kondensationsoberfläche entlanggeführt wird, bevor er auf das Kondensationssieb 34 auftrifft. Zudem ist das Kondensationssieb 34 teilweise innerhalb des trichterförmigen Leitelements 33 angeordnet. Mit anderen Worten überlappen Kondensationssieb 34 und trichterförmiges Leitelement 33 in einem Längsabschnitt. Auf diese Weise wird der Abgasstrom S von dem trichterförmigen Leitelement 33 auf das Kondensationssieb 34 gerichtet und vor dem Passieren des Kondensationssiebes 34 verdichtet, so dass ein Druckverlust durch den Strömungswiderstands des Kondensationssiebes 34 verringert wird. Das Kondensationssieb 34 ist zylindermantelförmig ausgebildet und an der das Prallelement 32 von dem trichterförmigen Leitelement 33 beabstandenden Stützkonstruktion 50 gelagert. Das trichterförmige Leitelement 33 weist einen Bypass 33a in Form einer Durchgangsbohrung auf, der unter Umgehung des Kondensationssiebes 34 einen Strömungspfad von der Wasserabscheidekammer 31 in die Schalldämpfkammer 21 bereitstellt. Der Bypass 33a ist dabei so dimensioniert, dass er im Fall, dass das Kondensationssieb 34 z.B. durch gefrorenes Kondensat verstopft ist, einen Ausweichkanal für den Abgasstrom S bietet.

Die Schalldämpfvorrichtung 20 bildet im vorliegenden Fall eine Kombination aus Reflexionsschalldämpfer und Absorptionsschalldämpfer aus. Die Schalldämpfkammer 21 erstreckt sich entlang der Längsrichtung L und wird von einer Innenwand 130 des Gehäuses 13 radial begrenzt. Der Abgasstrom S kann von einer Eintrittsöffnung 211 zu einer Austrittsöffnung 212 durch die Schalldämpfkammer 21 strömen. Ein direkter Strömungspfad zwischen der Eintrittsöffnung 211 und der Austrittsöffnung 212 ist durch eine innerhalb der Schalldämpfkammer 21 angeordnete Strömungsleitvorrichtung 23 versperrt. Die Strömungsleitvorrichtung 23 weist ein stromabwärts der Eintrittsöffnung 211 angeordnetes Aufweitungselement 231 zur radialen Aufweitung zumindest eines Teils des durch die Eintrittsöffnung 211 strömenden Abgasstroms S in Richtung der Innenwand 130 auf. Die Strömungsleitvorrichtung 23 bildet stromabwärts des Aufweitungselements 231 einen Rückströmungskanal 230 aus, innerhalb dessen ein Strömungspfad für den Abgasstrom S bereitgestellt wird, dessen Strömungsrichtung SR entgegengesetzt zur Hauptströmungsrichtung R verläuft. Die Strömungsleitvorrichtung 23 bildet auf diese Weise einen labyrinthartigen Ausbreitungspfad für den Abgasstrom S aus, entlang dem der Abgasstrom S zumindest zwei Mal umgelenkt wird, wobei ihm ein Teil der Schallenergie entzogen wird.

Die Kavität 10 erstreckt sich entlang der Längsmittelachse A des Schalldämpfers 1 und rotationssymmetrisch um die Längsmittelachse A. Im vorliegenden Fall ist die Kavität 10 zylindrisch ausgebildet. Die Wasserabscheidevorrichtung 30 und die Schalldämpfervorrichtung 20 sind zentriert zu der Längsmittelachse A angeordnet. Dadurch wird eine gleichmäßige und geräuscharme Strömung des Abgasstroms begünstigt, da insbesondere auf einen Wechsel der Hauptströmungsrichtung R (Strömungsumkehr) verzichtet wird. Das vorteilhafte Strömungsverhalten wird auch dadurch begünstigt, dass die Einlassöffnung 11 und die Auslassöffnung 12 zentriert zur Längsmittelachse A angeordnet sind.

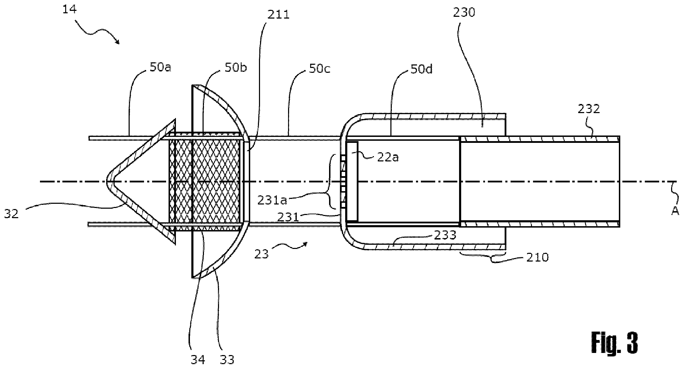

Der Schalldämpfer 1 weist ein Gehäuse 13 auf, das die Mantelfläche der zylindrischen Kavität 10 begrenzt. Im vorliegenden Fall begrenzt das Gehäuse 13 zusätzlich auch eine einlassseitige Stirnseite der Kavität 10, während eine auslassseitige Stirnseite von einem separaten Deckel 15 begrenzt wird. Aufgrund der konstruktiven Ausgestaltung des Schalldämpfers 1, insbesondere aufgrund der Rotationssymmetrie der einzelnen Bestandteile des Schalldämpfers 1 um die Längsmittelachse A, wird eine besonders einfache Herstellung ermöglicht. Der Schalldämpfer 1 kann eine aus Modulen zusammenbaubar oder einstückig ausgebildete Struktur 14 aufweisen, die als Ganzes in das Gehäuse 13 einsetzbar ist, wobei die Struktur 14 zusammen mit dem Gehäuse 13 die Wasserabscheidevorrichtung 30 und die Schalldämpfvorrichtung 20 ausbildet. Im vorliegenden Fall gibt das Gehäuse 13 hierzu auslassseitig eine mit dem Deckel 15 verschließbare Einsetzöffnung für die Struktur 14 frei. Der Deckel 15 kann auch an der Struktur 14 befestigt sein oder einstückig mit dieser ausgebildet sein. Die Struktur 14 kann beispielsweise das Prallelement 32, das trichterförmige Leitelement 33 und die Strömungsleitvorrichtung 23 aufweisen. Die Struktur 14 kann z.B. eine oder mehrere Stützkonstruktionen 50a, 50b, 50c, 50d aufweisen (s. Fig. 3), die das Prallelement 32, das trichterförmige Leitelement 33 und die Teile der Strömungsleitvorrichtung 23 voneinander beabstandet und aneinander befestigt. Es kann in einigen Anwendungsfällen auch vorteilhaft sein, die Struktur 14 an zumindest einer Querschnittsebene in einzelne Module zu teilen. Diese einzelnen Module können im zusammengebauten Zustand des Schalldämpfers 1 durch die Stirnseiten des Gehäuses 13 zusammengehalten werden.

Die Strömungsleitvorrichtung 23 weist einen stromaufwärts der Austrittsöffnung 212 der Schalldämpfkammer 21 angeordneten ersten Rohrabschnitt 232 auf, der in die Austrittsöffnung 212 mündet. Der erste Rohrabschnitt 232 weist dabei bevorzugt eine Länge L1 auf, die einem Drittel bis zwei Drittel der Gesamtlänge L2 der Schalldämpfkammer 21 entspricht.

Das Aufweitungselement 231 ist auf seiner stromabwärts gelegenen Seite mit einem zweiten Rohrabschnitt 233 der Strömungsleitvorrichtung 23 verbunden, wobei der zweite Rohrabschnitt 233 ausgebildet ist, mit seiner Außenfläche 233a einen Ringspalt 202 für den durch das Aufweitungselement 231 aufgeweiteten Teil Sa des Abgasstroms S von innen zu begrenzen. Der zweite Rohrabschnitt 233 umgibt den ersten Rohrabschnitt 232 teilweise, derart, dass der Rückströmungskanal 230 in einem Längsabschnitt 210 der Schalldämpfkammer 21 zwischen den Rohrabschnitten 232, 233 ausgebildet ist. Der Rückströmungskanal 230 ist ein von einer Außenfläche des ersten Rohrabschnitts 232 und der einer Innenfläche des zweiten Rohrabschnitts 233 begrenzter Ringspalt.

Die Strömungsleitvorrichtung 23 führt den aufgeweiteten Teil Sa des Abgasstroms S nah an der Innenwand 130 entlang. Diese Innenwand 130 ist mit einer Schicht 22 aus einem schallabsorbierenden Material ausgekleidet, das mit dem aufgeweiteten Teil Sa des Abgasstroms S wechselwirken kann. Die Schicht 22 aus schallabsorbierendem Material kann durch eine fluiddurchlässige Haltestruktur (hier nicht gezeigt), aufweisend ein oder mehrere Stützelemente, im Nahbereich der Innenwand 130 gehalten werden. Die Schicht 22 aus schallabsorbierendem Material erstreckt sich hierbei entlang der Länge L2 der Schalldämpfkammer vollumfänglich um die Strömungsleitvorrichtung 23 herum.

Das Aufweitungselement 231 weist einen perforierten Bereich 231a auf, der gegenüber der Eintrittsöffnung 211 fluchtend angeordnet ist. Hierdurch kann ein geringer Anteil des Abgasstroms S durch das Aufweitungselement 231 hindurch zu der stromabwärts angeordneten weiteren Schicht 22a aus schallabsorbierendem Material, z.B. einer langfaserigen Mineralwolle, strömen und mit dieser wechselwirken. Die weitere Schicht 22a aus schallabsorbierendem Material ist dabei fluchtend mit dem perforierten Bereich 231a und unmittelbar an diesem angrenzend angeordnet.

Der Schalldämpfer 1 weist eine die Wasserabscheidekammer 31 teilweise umgebende Wasserauffangkammer 40 auf, die über eine Abflussöffnung 41 derart mit der Wasserabscheidekammer in fluidleitender Verbindung steht, dass aus dem Abgasstrom S abgeschiedenes Wasser aus der Wasserabscheidekammer 31 gravitationsbedingt selbstständig, in die Wasserauffangkammer 40 abfließen und dort aufgefangen werden kann. Abgeschiedenes Wasser kann somit optimal aus der Wasserabscheidekammer 31 abfließen. Die Form des Prallelements 32 sowie die Form des trichterförmigen Leitelements 33 begünstigen einen gerichteten Fluss des abgeschiedenen Wassers in Richtung der Abflussöffnung 41.

Das in der Wasserauffangkammer 40 aufgefangene Wasser kann in einfacher Weise z.B. über eine Abführöffnung 42 aktiv - z.B. durch eine Pumpe - oder passiv - z.B. gravitationsbedingt selbstständig - aus der Wasserauffangkammer bzw. aus dem Schalldämpfer abgeführt werden. Die Wasserauffangkammer 40 muss lediglich einen kleinen Bereich der Wasserabscheidekammer 31 umgeben - z.B. einen bezüglich der Gravitationsrichtung G unten liegenden Bereich, der sich aus einer Blickrichtung parallel zur Längsmittelachse A etwa zwischen einer "5-Uhr-Position" und einer "7-Uhr-Position" befinden kann. Die Wasserauffangkammer 40 kann somit ein wesentlich geringeres Innenvolumen aufweisen als die Wasserabscheidekammer 31. Die Kavität 10 und die Wasserauffangkammer 40 sind durch eine Wandung der Kavität 10 getrennt, wodurch ein kompakter Aufbau des Schalldämpfers 1 erreicht wird. Eine die Wasserauffangkammer 40 begrenzende Wandung kann ebenfalls Teil des Gehäuses 13 sein und insbesondere einstückig mit diesem ausgebildet sein. In diesem Fall kann eine in das Gehäuse 13 einschiebbare Trennwand vorgesehen sein, die die Wasserabscheidekammer 31 von der Wasserauffangkammer 40 abtrennt.

Die Wasserauffangkammer 40 umgibt ferner die Schalldämpfkammer 21 und steht über Öffnungen 41a, 41b, 41c, 41d derart mit der Schalldämpfkammer 21 in fluidleitender Verbindung, dass aus dem Abgasstrom S kondensiertes Wasser aus der Schalldämpfkammer 21 gravitationsbedingt selbstständig in die Wasserauffangkammer 40 abfließen kann. Auf diese Weise wird eine Wasseransammlung in der Schalldämpfvorrichtung 20 vermieden, die sich sonst negativ auf die Geräuschdämpfung auswirken könnte.

Zur Bereitstellung einer ausreichenden Aufnahmekapazität erstreckt sich die Wasserauffangkammer 40 im Wesentlichen entlang der Gesamtlänge der Kavität 10.

Der Schalldämpfer 1 weist ein Heizelement 43 zum Beheizen zumindest eines Teils einer die Wasserauffangkammer 40 begrenzenden Wandung auf. Auf diese Weise kann eine Abführung des Wassers auch bei niedrigen Außentemperaturen, bei denen mit einem Einfrieren des Kondensats zu rechnen ist, gewährleistet werden. Das Heizelement 43 ist dabei in die Wandung eingebettet und erstreckt sich entlang zumindest der Hälfte der Gesamtlänge L der Wasserauffangkammer 40. Das Heizelement 43 kann alternativ in einem die Abführöffnung 42 umgebenden Bereich der die Wasserauffangkammer 40 begrenzenden Wandung eingebettet sein. Es können auch mehrere Heizelemente 43 vorgesehen sein.

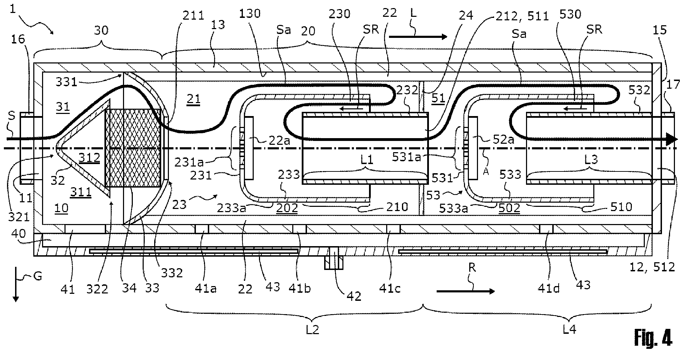

Fig. 4 zeigt ein zweites Ausführungsbeispiel eines erfindungsgemäßen Schalldämpfers 1 für einen Abgasstrang 4 eines Brennstoffzellensystems 2 in einer Schnittdarstellung. Der Schalldämpfer 1 des zweiten Ausführungsbeispiels ist im Wesentlichen so aufgebaut, wie der Schalldämpfer 1 des ersten Ausführungsbeispiels, wobei die Schalldämpfvorrichtung 20 stromabwärts der Schalldämpfkammer 21 zusätzlich eine weitere Schalldämpfkammer 51 mit einer weiteren Strömungsleitvorrichtung 53 aufweist. Die Schalldämpfkammer 21 und die weitere Schalldämpfkammer 51 sind durch eine Trennwand 24 der Schalldämpfvorrichtung 20 getrennt. Der erste Rohrabschnitt 232 der Strömungsleitvorrichtung 23 mündet in die weitere Schalldämpfkammer 51.

Die weitere Schalldämpfkammer 51 ersteckt sich entlang der Längsrichtung L und wird von der Innenwand 130 des Gehäuses 13 radial begrenzt. Der aus der Austrittsöffnung 212 der Schalldämpfkammer 21 austretende Abgasstrom S strömt in eine Eintrittsöffnung 511 der weiteren Schalldämpfkammer 51 und kann weiter zu einer Austrittsöffnung 512 der weiteren Schalldämpfkammer 51 strömen, Insbesondere bildet die Austrittsöffnung 212 der Schalldämpfkammer 21 die Eintrittsöffnung 511 der weiteren Schalldämpfkammer 51 aus. Innerhalb der weiteren Schalldämpfkammer 51 ist die weitere Strömungsleitvorrichtung 53 angeordnet, die ein stromabwärts der Eintrittsöffnung 511 angeordnetes weiteres Aufweitungselement 531 zur radialen Aufweitung zumindest eines Teils des durch die Eintrittsöffnung 511 strömenden Abgasstroms S in Richtung der Innenwand 130 aufweist. Stromabwärts des weiteren Aufweitungselements 531 bildet die weitere Strömungsleitvorrichtung 53 einen weiteren Rückströmungskanal 530 aus, innerhalb dessen ein weiterer Strömungspfad für den Abgasstrom S bereitgestellt wird, dessen Strömungsrichtung SR entgegengesetzt zur Hauptströmungsrichtung R verläuft.

Die weitere Strömungsleitvorrichtung 53 ist im Wesentlichen so aufgebaut, wie die Strömungsleitvorrichtung 23. Die weitere Strömungsleitvorrichtung 53 weist einen stromaufwärts der Austrittsöffnung 512 der weiteren Schalldämpfkammer 51 angeordneten ersten Rohrabschnitt 532 auf, der in die Austrittsöffnung 512 mündet. Der erste Rohrabschnitt 532 weist dabei bevorzugt eine Länge L3 auf, die einem Drittel bis zwei Drittel der Gesamtlänge L4 der weiteren Schalldämpfkammer 51 entspricht.

Das Aufweitungselement 531 ist auf seiner stromabwärts gelegenen Seite mit einem zweiten Rohrabschnitt 533 der weiteren Strömungsleitvorrichtung 53 verbunden, wobei der zweite Rohrabschnitt 533 ausgebildet ist, mit seiner Außenfläche 533a einen Ringspalt 502 für den durch das Aufweitungselement 531 aufgeweiteten Teil Sa des Abgasstroms S von innen zu begrenzen. Der zweite Rohrabschnitt 533 umgibt den ersten Rohrabschnitt 532 teilweise, derart, dass der Rückströmungskanal 530 in einem Längsabschnitt 510 der weiteren Schalldämpfkammer 51 zwischen den Rohrabschnitten 532, 533 ausgebildet ist. Der Rückströmungskanal 530 ist ein von einer Außenfläche des ersten Rohrabschnitts 532 und der einer Innenfläche des zweiten Rohrabschnitts 533 begrenzter Ringspalt.

Die weitere Strömungsleitvorrichtung 53 führt den aufgeweiteten Teil Sa des Abgasstroms S nah an der Innenwand 130 entlang. Die Innenwand 130 ist mit der Schicht 22 aus einem schallabsorbierenden Material ausgekleidet, das mit dem aufgeweiteten Teil Sa des Abgasstroms S wechselwirken kann. Die Schicht 22 aus schallabsorbierendem Material kann durch eine fluiddurchlässige Haltestruktur (hier nicht gezeigt), aufweisend ein oder mehrere Stützelemente, im Nahbereich der Innenwand 130 gehalten werden. Die Schicht 22 aus schallabsorbierendem Material erstreckt sich hierbei entlang der Länge L4 der Schalldämpfkammer vollumfänglich um die weitere Strömungsleitvorrichtung 53 herum.

Das Aufweitungselement 531 weist einen perforierten Bereich 531a auf, der gegenüber der Eintrittsöffnung 511 fluchtend angeordnet ist. Hierdurch kann ein geringer Anteil des Abgasstroms S durch das Aufweitungselement 531 hindurch zu der stromabwärts angeordneten weiteren Schicht 52a aus schallabsorbierendem Material, z.B. einer langfaserigen Mineralwolle, strömen und mit dieser wechselwirken. Die weitere Schicht 52a aus schallabsorbierendem Material ist dabei fluchtend mit dem perforierten Bereich 531a und unmittelbar an diesem angrenzend angeordnet.

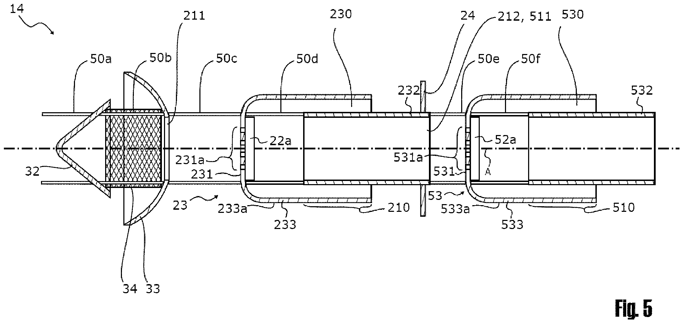

Der Schalldämpfer 1 kann eine aus Modulen zusammenbaubar oder einstückig ausgebildete Struktur 14 (s. Fig. 5) aufweisen, die als Ganzes in das Gehäuse 13 einsetzbar ist, wobei die Struktur 14 zusammen mit dem Gehäuse 13 die Wasserabscheidevorrichtung 30 und die Schalldämpfvorrichtung 20 ausbildet. Im vorliegenden Fall gibt das Gehäuse 13 hierzu auslassseitig eine mit dem Deckel 15 verschließbare Einsetzöffnung für die Struktur 14 frei. Der Deckel 15 kann auch an der Struktur 14 befestigt sein oder einstückig mit dieser ausgebildet sein. Die Struktur 14 kann beispielsweise das Prallelement 32, das trichterförmige Leitelement 33, die Strömungsleitvorrichtung 23 und die weitere Strömungsleitvorrichtung 53 aufweisen. Die Struktur 14 kann z.B. eine oder mehrere Stützkonstruktionen 50a, 50b, 50c, 50d, 50e, 50f aufweisen (s. Fig. 5), die das Prallelement 32, das trichterförmige Leitelement 33, die Teile der Strömungsleitvorrichtung 23 und die Teile der weiteren Strömungsleitvorrichtung 52 voneinander beabstandet und aneinander befestigt. Es kann in einigen Anwendungsfällen auch vorteilhaft sein, die Struktur 14 an zumindest einer Querschnittsebene in einzelne Module zu teilen. Diese einzelnen Module können im zusammengebauten Zustand des Schalldämpfers 1 durch die Stirnseiten des Gehäuses 13 zusammengehalten werden.

Ergänzend sei darauf hingewiesen, dass "aufweisend" keine anderen Elemente oder Schritte ausschließt und "ein" oder "eine" keine Vielzahl ausschließt.

Der Schutzbereich der vorliegenden Erfindung ist durch die Patentansprüche gegeben und wird durch die in der Beschreibung erläuterten oder den Figuren gezeigten Merkmale nicht beschränkt.

### Bezugszeichenliste (Teil der Beschreibung)

- 1: Schalldämpfer
- 2: Brennstoffzellensystem
- 3: Brennstoffzelle
- 4: Abgasstrang
- 4a: Abgaszuleitung des Abgasstrangs
- 4b: Abgasableitung des Abgasstrangs
- 5: Wasserstoff
- 6: Luft
- 10: Kavität des Schalldämpfers
- 11: Einlassöffnung der Kavität
- 12: Auslassöffnung der Kavität
- 13: Gehäuse des Schalldämpfers
- 130: Innenwand des Gehäuses
- 14: Struktur des Schalldämpfers
- 15: Deckel des Schalldämpfers
- 16: Einlassstutzen des Schalldämpfers
- 17: Auslassstutzen des Schalldämpfers
- 20: Schalldämpfvorrichtung des Schalldämpfers
- 21: Schalldämpfkammer der Schalldämpfvorrichtung
- 210: Längsabschnitt der Schalldämpfkammer
- 211: Eintrittsöffnung der Schalldämpfkammer
- 212: Austrittsöffnung der Schalldämpfkammer
- 22, 22a: Schichten schallabsorbierenden Materials
- 23: Strömungsleitvorrichtung der Schalldämpfvorrichtung
- 230: Rückströmungskanal
- 231: Aufweitungselement
- 231a: perforierter Bereich des Aufweitungselements
- 232: erster Rohrabschnitt
- 233: zweiter Rohrabschnitt
- 233a: Außenfläche des zweiten Rohrabschnitts
- 24: Trennwand
- 30: Wasserabscheidevorrichtung
- 31: Wasserabscheidekammer der Wasserabscheidevorrichtung
- 311: erste Teilkammer der Wasserabscheidekammer
- 312: zweite Teilkammer der Wasserabscheidekammer
- 32: Prallelement der Wasserabscheidevorrichtung

- 321: stromaufwärts gelegenes Ende des Prallelements
- 322: stromabwärts gelegenes Ende des Prallelements
- 33: trichterförmiges Leitelement der Wasserabscheidevorrichtung
- 33a: Bypass im trichterförmigen Leitelement
- 331: stromaufwärts gelegenes Ende des trichterförmigen Leitelements
- 332: stromabwärts gelegenes Ende des trichterförmigen Leitelements
- 34: Kondensationssieb der Wasserabscheidevorrichtung
- 40: Wasserauffangkammer des Schalldämpfers
- 41: Abflussöffnung der Wasserauffangkammer
- 41a-d: Öffnungen der Wasserauffangkammer
- 42: Abführöffnung der Wasserauffangkammer
- 43: Heizelement des Schalldämpfers
- 50a-f: Stützkonstruktionen
- 51: weitere Schalldämpfkammer der Schalldämpfvorrichtung
- 510: Längsabschnitt der weiteren Schalldämpfkammer
- 511: Eintrittsöffnung der weiteren Schalldämpfkammer
- 512: Austrittsöffnung der weiteren Schalldämpfkammer
- 52a: Schicht schallabsorbierenden Materials
- 53: weitere Strömungsleitvorrichtung der Schalldämpfvorrichtung
- 530: Rückströmungskanal
- 531: Aufweitungselement
- 531a: perforierter Bereich des Aufweitungselements
- 532: erster Rohrabschnitt
- 533: zweiter Rohrabschnitt
- 533a: Außenfläche des zweiten Rohrabschnitts
- A: Längsmittelachse des Schalldämpfers
- G: Gravitationsrichtung
- L: Längsrichtung des Schalldämpfers
- L1: Länge des ersten Rohrabschnitts der Strömungsleitvorrichtung
- L2: Länge der Schalldämpfkammer
- L3: Länge des ersten Rohrabschnitts der weiteren Strömungsleitvorrichtung
- L4: Länge der weiteren Schalldämpfkammer
- R: Hauptströmungsrichtung des Abgasstroms
- S: Abgasstrom
- Sa: aufgeweiteter Teil des Abgasstroms
- SR: Strömungsrichtung

## Patentansprüche

1. Schalldämpfer (1), insbesondere für einen Abgasstrang (4) eines Brennstoffzellensystems (2), mit
- einer durch ein Gehäuse (13) zumindest teilweise begrenzten Kavität (10), durch die ein Abgasstrom (S) des Brennstoffzellensystems (2) entlang einer Hauptströmungsrichtung (R) von einer Einlassöffnung (11) zu einer Auslassöffnung (12) der Kavität (10) strömen kann,
- einer innerhalb der Kavität (10) angeordneten Schalldämpfvorrichtung (20) zur Reduzierung eines Geräusches des Abgasstroms (S),
wobei die Schalldämpfvorrichtung (20) eine sich entlang einer Längsrichtung (L) erstreckende und von einer Innenwand (130) des Gehäuses (13) radial begrenzte Schalldämpfkammer (21) aufweist, durch die der Abgasstrom (S) von einer Eintrittsöffnung (211) zu einer Austrittsöffnung (212) der Schalldämpfkammer (21) strömen kann, wobei innerhalb der Schalldämpfkammer (21) eine Strömungsleitvorrichtung (23) angeordnet ist,
wobei die Strömungsleitvorrichtung (23) ein stromabwärts der Eintrittsöffnung (211) angeordnetes Aufweitungselement (231) zur radialen Aufweitung zumindest eines Teils des durch die Eintrittsöffnung (211) strömenden Abgasstroms (S) in Richtung der Innenwand (130) aufweist,
wobei die Strömungsleitvorrichtung (23) stromabwärts des Aufweitungselements (231) einen Rückströmungskanal (230) ausbildet, innerhalb dessen ein Strömungspfad für den Abgasstrom (S) bereitgestellt wird, dessen Strömungsrichtung (SR) entgegengesetzt zur Hauptströmungsrichtung (R) verläuft, und
- einer innerhalb der Kavität (10) stromaufwärts der Schalldämpfvorrichtung (20) angeordneten Wasserabscheidevorrichtung (30) zur Abtrennung von Wasser aus dem Abgasstrom (S), wobei die Wasserabscheidevorrichtung (30) zumindest eine Wasserabscheidekammer (31) aufweist.

2. Schalldämpfer (1) nach Anspruch 1, wobei die Strömungsleitvorrichtung (23) einen stromaufwärts der Austrittsöffnung (212) der Schalldämpfkammer (21) angeordneten ersten Rohrabschnitt (232) aufweist, der in die Austrittsöffnung (212) mündet.

3. Schalldämpfer (1) nach Anspruch 1 oder 2, wobei das Aufweitungselement (231) auf seiner stromabwärts gelegenen Seite mit einem zweiten Rohrabschnitt (233) der Strömungsleitvorrichtung (23) verbunden ist, wobei der zweite Rohrabschnitt (233) ausgebildet ist, mit seiner Außenfläche (233a) einen Ringspalt (202) für den durch das Aufweitungselement (231) aufgeweiteten Teil (Sa) des Abgasstrom (S) von innen zu begrenzen.

4. Schalldämpfer (1) nach Anspruch 2 und 3, wobei der zweite Rohrabschnitt (233) den ersten Rohrabschnitt (232) zumindest teilweise umgibt, derart, dass der Rückströmungskanal (230) in einem Längsabschnitt (210) der Schalldämpfkammer (21) zwischen den Rohrabschnitten (232, 233) ausgebildet ist.

5. Schalldämpfer (1) nach einem der vorangehenden Ansprüche, wobei die die Schalldämpfkammer (21) begrenzende Innenwand (130) mit einer Schicht (22) aus einem schallabsorbierenden Material ausgekleidet ist.

6. Schalldämpfer (1) nach einem der vorangehenden Ansprüche, wobei das Aufweitungselement (231) einen perforierten Bereich (231a) aufweist, der gegenüber der Eintrittsöffnung (211) fluchtend angeordnet ist.

7. Schalldämpfer (1) nach Anspruch 6, wobei stromabwärts des perforierten Bereichs (231a) eine weitere Schicht (22a) aus schallabsorbierendem Material angeordnet ist.

8. Schalldämpfer (1) nach einem der vorangehenden Ansprüche, wobei die Schalldämpfvorrichtung (20) stromabwärts der Schalldämpfkammer (21) eine sich entlang der Längsrichtung (L) erstreckende und von der Innenwand (130) des Gehäuses (13) radial begrenzte weitere Schalldämpfkammer (51) aufweist, durch die der Abgasstrom (S) von einer Eintrittsöffnung (511) zu einer Austrittsöffnung (512) der weiteren Schalldämpfkammer (51) strömen kann, wobei innerhalb der weiteren Schalldämpfkammer (51) eine weitere Strömungsleitvorrichtung (53) angeordnet ist, wobei die weitere Strömungsleitvorrichtung (53) ein stromabwärts der Eintrittsöffnung (511) angeordnetes weiteres Aufweitungselement (531) zur radialen Aufweitung zumindest eines Teils des durch die Eintrittsöffnung (511) strömenden Abgasstroms (S) in Richtung der Innenwand (130) aufweist, wobei die weitere Strömungsleitvorrichtung (43) stromabwärts des weiteren Aufweitungselements (531) einen weiteren Rückströmungskanal (530) ausbildet, innerhalb dessen ein weiterer Strömungspfad für den Abgasstrom (S) bereitgestellt wird, dessen Strömungsrichtung (SR) entgegengesetzt zur Hauptströmungsrichtung (R) verläuft.

9. Schalldämpfer (1) nach einem der vorangehenden Ansprüche, wobei die Wasserabscheidevorrichtung (30) ein in der Wasserabscheidekammer (31) angeordnetes Prallelement (32) zur radialen Aufweitung des durch die Eintrittsöffnung (11) einströmenden Abgasstroms (S) sowie stromabwärts des Prallelements (32) ein trichterförmiges Leitelement (33) zur radialen Verjüngung des durch das Prallelement (32) aufgeweiteten Abgasstroms (S) aufweist.

10. Schalldämpfer (1) nach einem der vorangehenden Ansprüche mit einem die Wasserabscheidekammer (31) in zwei Teilkammern (311, 312) trennenden Kondensationssieb (34).

11. Schalldämpfer (1) nach einem der vorangehenden Ansprüche, wobei sich die Kavität (10) entlang einer Längsmittelachse (A) und insbesondere rotationssymmetrisch um die Längsmittelachse (A) erstreckt, wobei die Wasserabscheidevorrichtung (30) und die Schalldämpfvorrichtung (20) zentriert zur Längsmittelachse (A) angeordnet sind.

12. Schalldämpfer (1) nach Anspruch 11, wobei die Kavität (10) zylindrisch ausgebildet ist oder aus mehreren koaxial zueinander ausgerichteten zylindrischen Teilkavitäten ausgebildet ist, wobei das Gehäuse (13) zumindest die Mantelfläche(n) der Kavität (10) begrenzt, wobei der Schalldämpfer (1) eine aus Modulen zusammenbaubar oder einstückig ausgebildete Struktur (14) aufweist, die als Ganzes in das Gehäuse (13) einsetzbar ist, wobei die Struktur (14) zusammen mit dem Gehäuse (13) die Wasserabscheidevorrichtung (30) und die Schalldämpfvorrichtung (20) ausbildet.

13. Schalldämpfer (1) nach einem der vorangehenden Ansprüche mit einer die Wasserabscheidekammer (31) zumindest teilweise umgebenden Wasserauffangkammer (40), die über eine Abflussöffnung (41) derart mit der Wasserabscheidekammer (31) in fluidleitender Verbindung steht, dass aus dem Abgasstrom (S) abgeschiedenes Wasser aus der Wasserabscheidekammer (31), insbesondere gravitationsbedingt selbstständig, in die Wasserauffangkammer (40) abfließen und dort aufgefangen werden kann.

14. Schalldämpfer (1) nach Anspruch 13, wobei die Wasserauffangkammer (40) ferner die Schalldämpfkammer(n) (21, 51) zumindest teilweise umgibt und über eine Öffnung (41a, 41b, 41c, 4d) derart mit der oder den Schalldämpfkammer(n) (21, 51) in fluidleitender Verbindung steht, dass aus dem Abgasstrom (S) kondensiertes Wasser aus der oder den Schalldämpfkammer(n) (21, 51), insbesondere gravitationsbedingt selbstständig, in die Wasserauffangkammer (40) abfließen kann.

15. Brennstoffzellensystem (2) mit
einer Brennstoffzelle (3),
einem von der Brennstoffzelle (3) abgehenden Abgasstrang (4) und
einem in dem Abgasstrang (4) installierten Schalldämpfer (1) nach einem der vorangehenden Ansprüche.
